# EUROPEAN PATENT SPECIFICATION

(11) **EP 1 930 693 B1**
(45) Date of publication and mention of the grant of the patent: **13.02.2013**
(21) Application number: 06798338.7
(22) Date of filing: 26.09.2006
(51) Int. Cl.: G01C 21/00, G08G 1/0969

(54) **POSITION ESTIMATION DEVICE, POSITION ESTIMATION METHOD, POSITION ESTIMATION PROGRAM, AND COMPUTER-READABLE RECORDING MEDIUM**
EINRICHTUNG, VERFAHREN UND PROGRAMM ZUR POSITIONSSCHÄTZUNG UND COMPUTERLESBARES AUFZEICHNUNGSMEDIUM
DISPOSITIF D ESTIMATION DE POSITION, MÉTHODE D ESTIMATION DE POSITION, PROGRAMME D ESTIMATION DE POSITION ET SUPPORT D ENREGISTREMENT LISIBLE PAR ORDINATEUR

(30) Priority: 30.09.2005 JP 2005287851
(43) Date of publication of application: 11.06.2008
(73) Proprietor: Pioneer Corporation, Kanagawa 212-0031 (JP)
(72) Inventor: FUJIWARA, Toshiki, Kawagoe-shi, Saitama 350-8555 (JP); OKAMOTO, Tatsuya, Kawagoe-shi, Saitama 350-8555 (JP)
(74) Representative: Haley, Stephen
(86) International application number: PCT/JP2006/319072
(87) International publication number: WO 2007/040100

(56) References cited:
- EP-A1- 0 734 007
- EP-A1- 1 130 358
- JP-A- 2001 317 947
- JP-A- 2004 177 328
- JP-A- 2005 195 387
- US-A1- 2002 143 466
- US-A1- 2002 152 027

## Description

### TECHNICAL FIELD

The present invention relates to a position estimating apparatus, a position estimating method, a position estimating program, and a computer-readable recording medium that estimate a position of a mobile object. The invention is not limited to the position estimating apparatus, the position estimating method, the position estimating program, and the computer-readable recording medium.

### BACKGROUND ART

Conventionally, an in-vehicle navigation device mounted on a mobile object such as a vehicle calculates a current position of the vehicle on a map based on satellite navigation, inertial navigation, etc. With satellite navigation, signals sent from plural global-positioning-system (GPS) satellites are received by a GPS receiver, and a distance between each GPS satellite and the GPS receiver is calculated to calculate position coordinate data of the GPS receiver. With inertial navigation, a movement amount of the vehicle is calculated by detecting, with an inertial sensor such as a velocity sensor and an acceleration sensor, movement information varying according to the movement of the vehicle.

Recently, it has been suggested that a main unit including a GPS receiver, a monitor, and a controller to control display of the monitor is implemented as a navigation unit that is detached as necessary, and the detached navigation unit is used outside the vehicle (see, for example, Patent Document 1 below and EP1130358A).

Patent Document 1: Japanese Patent Application Laid-open Publication No. 2003-315060

### DISCLOSURE OF INVENTION

### PROBLEM TO BE SOLVED BY THE INVENTION

However, according to the above conventional technique, the main unit including the GPS receiver is detached to be used as the navigation unit. Therefore, there is a problem in that when a vehicle moves while the navigation unit is detached, the position of the vehicle cannot be estimated even if the amount of movement is calculated with the inertial sensor.

### MEANS FOR SOLVING PROBLEM

In a first aspect, the invention consists in a position estimating apparatus that includes a fixed unit fixed on a mobile object and a detachable navigation unit detachable from the fixed unit, and for estimating a current position of the mobile object based on a current position of the mobile object calculated using satellite navigation and a movement amount of the mobile object calculated using inertial navigation, wherein
the fixed unit includes an accumulating unit for accumulating the movement amount of the mobile object calculated by an inertial sensor,
the detachable navigation unit includes
a GPS device,
a calculating unit for calculating a current position of the mobile object by the GPS device, and
an estimating unit for estimating the current position of the mobile object based on the movement amount of the mobile object accumulated by the accumulating unit and the current position of the mobile object calculated by the calculating unit, and the position estimating apparatus further comprises:
a detecting unit for detecting a detachment of the detachable navigation unit from the fixed unit; and
a communication unit for sending the movement amount accumulated by the accumulating unit from the fixed unit to the detachable navigation unit,
characterised in that the estimating unit is adapted to estimate, when the detecting unit has detected the detachment of the detachable navigation unit from the fixed unit, the current position of the mobile object upon re-attachment of the detachable navigation unit to the fixed unit based on the current position of the mobile object estimated upon the detachment of the detachable navigation unit from the fixed unit, and the movement amount accumulated by the accumulating unit while the detachable navigation unit was detached from the fixed unit.

In a second aspect, the invention consists in a position estimating method of estimating a current position of a mobile object on which a fixed unit is mounted, a detachable navigation unit being detachable from the fixed unit, based on a current position of the mobile object calculated using satellite navigation and a movement amount of the mobile object calculated using inertial navigation, the position estimating method comprising:
an accumulating step of accumulating the movement amount of the mobile object calculated by an inertial sensor included in the fixed unit;
a calculating step of calculating a current position of the mobile object by a GPS device included in the detachable navigation unit;
a first estimating step of estimating the current position of the mobile object based on the movement amount of the mobile object accumulated at the accumulating step and the current position of the mobile object calculated at the calculating step;
a detecting step of detecting a detachment of the detachable navigation unit from the fixed unit; and
a communication step of sending the movement amount accumulated at the accumulating step from the fixed unit to the detachable navigation unit;
characterised by a second estimating step of estimating, when the detachment of the detachable navigation unit from the fixed unit has been detected at the detecting step, the current position of the mobile object upon re-attachment of the detachable navigation unit to the fixed unit based on the current position of the mobile object estimated at the first estimating step upon the detachment of the detachable navigation unit from the fixed unit, and the movement amount accumulated at the accumulating step while the detachable navigation unit was detached from the fixed unit.

In a third aspect, the invention consists in a position estimating program which causes a computer to execute the position estimating method according to the second aspect.

In a fourth aspect, the invention consists in a computer-readable recording medium which stores therein the position estimating program according to the third aspect.
In a fifth aspect, the invention consists in a detachable navigation unit detachable from a fixed unit fixed on a mobile object, said detachable navigation unit and said fixed unit being part of a position estimating apparatus configured for estimating a current position of the mobile object, comprising:
a GPS device;
a calculating unit configured for calculating a current position of the mobile object by using the GPS device;
an estimating unit configured for estimating the current position of the mobile object based on a movement amount obtained from the fixed unit via a communication unit of the position estimating apparatus and the current position calculated by the calculating unit; and
a detecting unit configured for detecting detachment from the fixed unit;
characterised in that the movement amount is the amount of movement of the mobile object while the detachable navigation unit is detached from the fixed unit,
wherein the estimating unit is adapted to estimate, when the detecting unit detects re-attachment to the fixed unit, the current position of the mobile object upon the re-attachment to the fixed unit based on the movement amount and the position of the mobile object at the time of detachment of the detachable navigation unit from the fixed unit.
In a sixth aspect, the invention consists in a fixed unit, adapted to be fixed on a mobile object, that transmits, to the detachable navigation unit according to the fifth aspect, a movement amount used for estimating a current position of the mobile object, comprising:
an accumulating unit adapted to accumulate the movement amount while the detachable navigation unit is detached from the fixed unit; and
wherein the fixed unit is adapted to feed back to the detachable navigation unit the movement amount that is used by the estimating unit to estimate, when the detecting unit detects re-attachment of the detachable navigation unit, the current position of the mobile object upon the re-attachment to the detachable navigation unit.

### BRIEF DESCRIPTION OF DRAWINGS

Fig. 1 is a block diagram of a functional configuration of a position estimating apparatus according to an embodiment;
Fig. 2 is a flowchart of a process performed by the position estimating apparatus according to the embodiment;
Fig. 3 is a block diagram of a hardware configuration of a navigation apparatus according to an example 1;
Fig. 4 is a schematic illustrating an example of detachment of a navigation unit according to the example 1;
Fig. 5 is a schematic illustrating an example of attachment of the navigation unit according to the example 1;
Fig. 6 is a schematic illustrating an example when an attachment position according to the example 1 is included in an unlocatable area;
Fig. 7 is a schematic illustrating an example when the attachment position according to the example 1 is in a multipath area;
Fig. 8 is a flowchart of a process performed by an in-vehicle unit of the navigation apparatus according to the example 1;
Fig. 9 is a flowchart of a process performed by the navigation unit of the navigation apparatus according to the example 1;
Fig. 10 is a flowchart of processing performed by an in-vehicle unit of a navigation apparatus according to an example 2; and
Fig. 11 is a flowchart of processing performed by the navigation unit of the navigation apparatus according to the example 2.

### EXPLANATIONS OF LETTERS OR NUMERALS

- 100: position estimating apparatus
- 101: fixed unit
- 102: detachable unit
- 103: communication unit
- 104: detecting unit
- 105: accumulating unit
- 106: calculating unit
- 107: estimating unit
- 108: storing unit A
- 109: storing unit B

### BEST MODE(S) FOR CARRYING OUT THE INVENTION

Referring to the accompanying drawings, exemplary embodiments of the position estimating apparatus, the position estimating method, the position estimating program, and the computer-readable recording medium according to the present invention are explained in detail below.

### (Embodiment)

### (Functional Configuration of Position Estimating Apparatus)

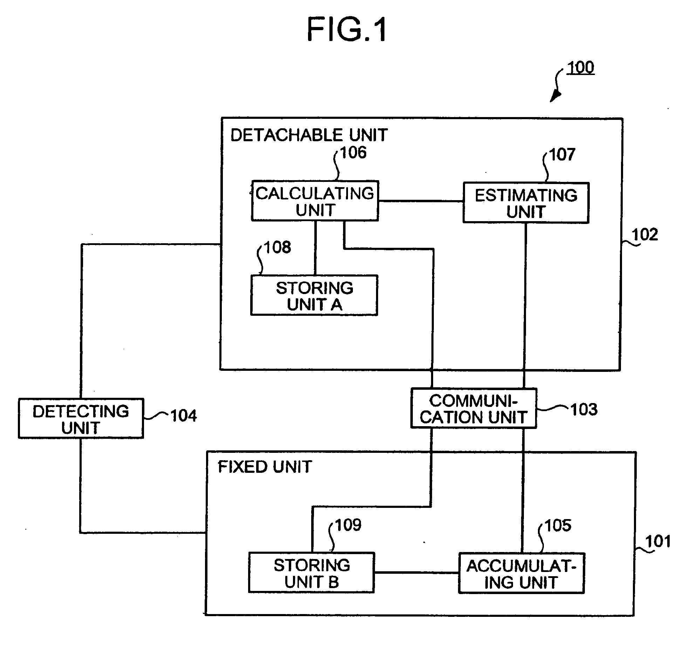

Referring to Fig. 1, a functional configuration of a position estimating apparatus according to an embodiment is explained. Fig. 1 is a block diagram of the functional configuration of the position estimating apparatus according to the embodiment.

As shown in Fig. 1, a position estimating apparatus 100 includes a fixed unit 101, a detachable unit 102, a communication unit 103, and a detecting unit 104. The fixed unit 101 is fixed to a mobile object, and includes an accumulating unit 105 and a storing unit B 109. The detachable unit 102 is detachable from the fixed unit 101, and includes a calculating unit 106, an estimating unit 107, and a storing unit A 108.

The communication unit 103 controls communication between the fixed unit 101 and the detachable unit 102 to transfer various information. For example, as explained hereinafter, when the detachable unit 102 is detached from the fixed unit 101, the current position of the mobile object estimated by the estimating unit 107 at the time of the detachment of the detachable unit 102 from the fixed unit 101 is sent to a storing unit B 109. Further, when the detachable unit 102 is attached to the fixed unit 101, the movement amount accumulated by the accumulating unit 105 while the detachable unit 102 is detached from the fixed unit 101 may be sent to the estimating unit 107. Additionally, the communication unit 103 controls wired or wireless communication, and may perform wireless communication to transfer various information even when the detachable unit 102 is detached from the fixed unit 101, for example.

The detecting unit 104 detects attachment/detachment of the detachable unit 102 to/from the fixed unit 101. The detection of attachment/detachment may be performed by the detection of attachment/detachment of a connector (not shown) that connects the fixed unit 101 and the detachable unit 102.

The accumulating unit 105 accumulates the movement amount of the mobile object calculated using the inertial navigation. In the inertial navigation, the movement amount of the mobile object is calculated by detecting, with an inertial sensor (not shown), movement information that changes according to the movement of the mobile object.

The calculating unit 106 calculates the current position of the mobile object using the satellite navigation. In the satellite navigation, for example, signals sent from plural GPS satellites are received by a GPS receiver, a distance between each GPS satellite and the GPS receiver is calculated to calculate position coordinate data of the GPS receiver, and the current position of the mobile object is based on the calculated position coordinate data.

The storing unit A 108 and the storing unit B 109 store the current position of the mobile object estimated by the estimating unit 107 (explained hereinafter) at the time of the detachment of the detachable unit 102 from the fixed unit 101. Either the storing unit A 108 or the storing unit B 109 may be provided in the fixed unit 101 or the detachable unit 102. The time of the detachment of the detachable unit 102 from the fixed unit 101 is, for example, the time when the detecting unit 104 detects the detachment of the detachable unit 102 from the fixed unit 101. At the time of the detachment, the current position of the mobile object is sent from the estimating unit 107 by the communication unit 103 and stored in the storing unit B 109.

The estimating unit 107 estimates the current position of the mobile object based on the movement amount of the mobile object accumulated by the accumulating unit 105 and the current position of the mobile object calculated by the calculating unit 106. For example, to estimate the current position of the mobile object, the current position of the mobile object estimated by the estimating unit 107 at the time of the detachment of the detachable unit 102 from the fixed unit 101 is stored in the storing unit A 108 or the storing unit B 109 when the detachable unit 102 is detached from the fixed unit 101 mounted on the mobile object. Then, the movement amount while the detachable unit 102 is detached from the fixed unit 101 is accumulated by the accumulating unit 105. When the detachable unit 102 is attached to the fixed unit 101, the estimating unit 107 estimates the current position of the mobile object at the time of the attachment of the detachable unit 102 to the fixed unit 101 based on the current position of the mobile object at the time of the detachment of the detachable unit 102 from the fixed unit 101 and the movement amount accumulated by the accumulating unit 105 while the detachable unit 102 is detached from the fixed unit 101. When estimating the current position of the mobile object, the current position of the mobile object calculated by the calculating unit 106 at the time of the attachment of the detachable unit 102 to the fixed unit 101 may be referred to.

### (Process Performed by Position Estimating Apparatus)

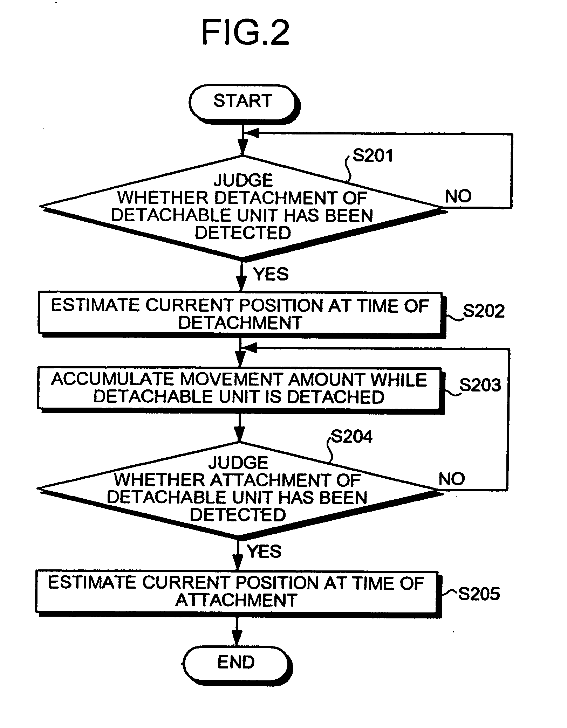

Referring to Fig. 2, a process performed by the position estimating apparatus according to the embodiment is explained. Fig. 2 is a flowchart of the process performed by the position estimating apparatus according to the embodiment. As shown in the flowchart of Fig. 2, the detecting unit 104 judges whether the detection of the detachable unit 102 from the fixed unit 101 is detected (step S201). When the detachment of the detachable unit 102 from the fixed unit 101 is detected (step S201: YES), the estimating unit 107 estimates the current position of the mobile object at the time of the detachment of the detachable unit 102 (step S202). The current position estimated at the step 202 at the time of the detachment of the detachable unit 102 is stored in the storing unit A 108 or the storing unit B 109.

The accumulating unit 105 accumulates the movement amount of the mobile object while the detachable unit 102 is detached from the fixed unit 101 (step S203). For example, the accumulating unit 105 performs accumulation processing of the movement amount calculated by detecting, with the inertial sensor (not shown), movement information that changes according to the movement of the mobile object.

The detecting unit 104 judges whether the attachment of the detachable unit 102 to the fixed unit 101 is detected (step S204). When the detecting unit 104 does not detect the attachment of the detachable unit 102 (step S204: NO), the process returns to step S203 and accumulation of the movement amount of the mobile object is repeated. When the detecting unit detects the attachment of the detachable unit 102 (step S204: YES), the estimating unit 107 estimates the current position of the mobile object at the time of the attachment of the detachable unit 102 to the fixed unit 101 (step S205), and a series of processing ends.

As explained above, according to the present embodiment, the current position of the mobile object at the time of the detachment of the detachable unit 102 from the fixed unit 101 is estimated, and the movement amount while the detachable unit 102 is detached from the fixed unit 101 is accumulated. Then, the current position of the mobile object at the time of the attachment of the detachable unit 102 is estimated based on the current position of the mobile object at the time of the detachment of the detachable unit 102 and the movement amount while the detachable unit 102 is detached. Therefore, the current position of the mobile object at the time of the attachment of the detachable unit 102 can be accurately estimated even if the fixed unit 101 moves while the detachable unit 102 is detached.

### [Example 1]

The example 1 of the present invention is explained below. In the example 1, a case where the position estimating apparatus of the present invention is implemented by a navigation apparatus mounted on a mobile object such as a vehicle (including four-wheel vehicles and two-wheel vehicles) is explained.

### (Hardware Configuration of Navigation Apparatus)

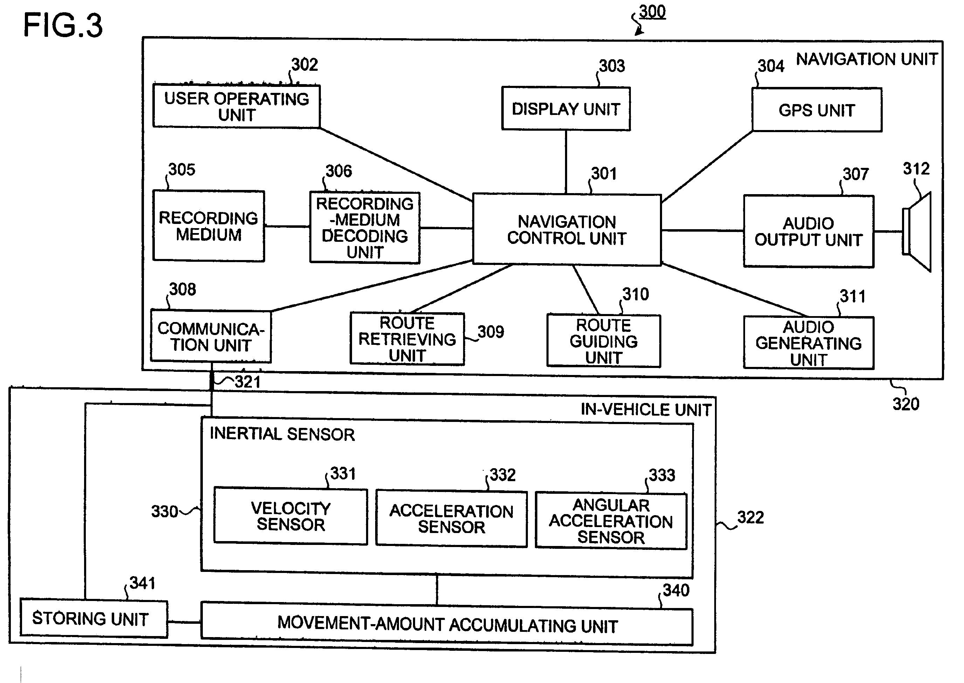

With reference to Fig. 3, a hardware configuration of the navigation apparatus according to the example 1 is explained. Fig. 3 is a block diagram of the hardware configuration of the navigation apparatus according to the example 1.

As shown in Fig. 3, a navigation apparatus 300 mounted on a mobile object, such as a vehicle, includes an in-vehicle unit 322 fixed on the vehicle and a navigation unit 320 detachable from the in-vehicle unit 322 that are connected to each other through a connector 321. The navigation unit 320 includes a navigation control unit 301, a user operating unit 302, a display unit 303, a GPS unit 304, a recording-medium decoding unit 306, an audio output unit 307, a communication unit 308, a route retrieving unit 309, a route guiding unit 310, an audio generating unit 311, and a speaker 312. The in-vehicle unit 322 includes an inertial sensor 330, a movement-amount accumulating unit 340, and a storing unit 341. The inertial sensor 330 includes a velocity sensor 331, an acceleration sensor 332, and an angular velocity sensor 333.

The navigation control unit 301 controls the entire navigation apparatus 300. The navigation control unit 301 is implemented by, for example, a micro computer including a central processing unit (CPU) executing a predetermined calculation process, a read only memory storing various control programs, a random access memory functioning as a work area of the CPU, etc.

The navigation control unit 301, upon route guidance, calculates where a vehicle having the navigation apparatus mounted thereon is traveling with respect to a map, based on information concerning the current position obtained by the GPS unit 304, map information obtained from the recording medium 305 through the recording-medium decoding unit 306, and information concerning the movement amount accumulated by the movement-amount accumulating unit 340, and outputs a calculation result to the display unit 303. The navigation control unit 301, upon route guidance, transfers information concerning the route guidance between the route retrieving unit 309, a route guiding unit 310, and the audio generating unit 311, and outputs information obtained as a result to the display unit 303 and the audio output unit 307.

The user operating unit 302 outputs, to the navigation control unit 301, information input by a user operating an operational device, such as a remote controller, a switch, and a touch panel.

The display unit 303 includes, for example, a cathode ray tube (CRT), a thin-film-transistor (TFT) liquid crystal display, an organic electroluminescence (EL) display, a plasma display, etc. Specifically, for example, the display unit 303 includes an image interface (I/F) and a display device that is connected to the image I/F and displays images. Specifically, for example, the image I/F includes a graphic controller that controls the overall display device, a buffer memory such as a video RAM (VRAM) that temporarily stores promptly displayable image information, and a control integrated circuit (IC) that controls the display device based on the image information output from the graphic controller. The display unit 303 displays, under the control of the navigation control unit 301, traffic information, map information, information concerning the route guidance, contents concerning images output from the navigation control unit 301, and other various information.

The GPS unit 304 includes a GPS receiver, and obtains information concerning the current position of a vehicle (the current position of the navigation apparatus 300). The GPS receiver receives a signal from a GPS satellite to calculate a geometric position between the GPS satellite and the GPS receiver. GPS is the abbreviation of the global positioning system that precisely calculates a position on the ground by receiving signals from four or more satellites. The GPS receiver includes an antenna for receiving the signals from the GPS satellites, a tuner that demodulates received signals, and a calculation circuit that calculates a current position based on the demodulated information.

Various control programs and various information are stored in the recording medium 305 in a readable state. The recording medium 305 is implemented by, for example, a hard disk (HD), a digital versatile disc (DVD), a compact disc (CD), a memory card, etc. The recording medium 305 may receive writing by the recording-medium decoding unit 306, and non-volatilely store written information.

Map information used for route retrieval and route guidance is stored in the recording medium 305. The map information stored in the recording medium 305 includes background data representing buildings, rivers, ground surfaces, etc., and road shape data representing road shapes that are two-dimensionally or three-dimensionally portrayed on a display screen of the display unit 303.

Although the map information is stored in the recording medium 305 in the example 1, it is not limited thereto. The map information may be stored in a server outside the navigation apparatus 300. In this case, the navigation apparatus 300 obtains the map information from the server though the communication unit 308 via a network, for example. The obtained information is stored in the RAM, etc.

The recording-medium decoding unit 306 controls the writing/reading of information to/from the recording medium 305.

The audio output unit 307 outputs audio such as guidance sound, images, and music by controlling the output to the speaker 312 connected thereto. The speaker 312 may be one or plural. The audio output unit 307 includes, for example, a digital-to-analog (D/A) converter that performs D/A conversion of audio digital information, an amplifier that amplifies an audio analog signal output from the D/A converter, and an audio-to-digital (A/D) converter that performs A/D conversion of the audio analog signal.

The communication unit 308 obtains various information from external devices. For example, the communication unit 308 communicates with other communication devices through a communication medium of, for example, a frequency modulation (FM) multiplexed tuner, a vehicle information and communication system (VICS) (registered trademark)/beacon receiver, a wireless communication device and other communication devices, a cellular phone, a personal handyphone system (PHS), a communication card and a wireless LAN.

The information obtained by the communication unit 308 includes traffic information that is distributed by the road-traffic-information communication system center, such as traffic congestion and traffic regulation, traffic information obtained by an employer with an original method, etc. The communication unit 308 may request traffic information though a network to a server storing nationwide traffic information, and obtain the requested information.

The route retrieving unit 309 retrieves an optimal route from a departure point to a destination point using the map information obtained from the recording medium 305 through the recording-medium decoding unit 306, and the traffic information obtained by the communication unit 308. The optimal route is the route that best complies with the user request.

The route guiding unit 310 generates route guidance information to guide the user to the destination point based on the optimal route information retrieved by the route retrieving unit 309, the position information of the mobile object obtained by the GPS unit 304, the information concerning the movement amount accumulated by the movement-amount accumulating unit 340, the map information obtained from the recording medium 305 through the recording-medium decoder 306, etc. The route guidance information generated at this time may be information that takes into consideration the traffic congestion information received by the communication unit 308. The route guidance information generated by the route guiding unit 310 is output to the display unit 303 through the navigation control unit 301.

The audio generating unit 311 generates various audio information such as guidance sound. In other words, the audio generating unit 311 sets a virtual audio source corresponding to a guidance point, generates audio guidance information, and outputs the generated audio guidance information to the audio output unit 307 through the navigation control unit 301.

Each of the sensors 331 to 333 of the inertial sensor 330 obtains information concerning behavior of the vehicle (behavior information). The behavior information includes, for example, the velocity information, the acceleration information, the angular velocity information of the vehicle, etc.

The velocity sensor 331 detects the velocity of the vehicle from a shaft on the output side of a transmission of the vehicle, and outputs the velocity information. The acceleration sensor 332 detects the acceleration of the vehicle, and outputs the acceleration information. The angular acceleration sensor 333 detects the angular acceleration of the vehicle during cornering, and outputs the angular acceleration.

The behavior information also includes lateral gravity information. For example, the lateral gravity information is information output by a lateral gravity sensor (not shown) based on outward force (gravity) generated by centrifugal force during cornering by the vehicle.

The movement-amount accumulating unit 340 accumulates the movement amount of the vehicle output from the inertial sensor 330. Though the output from the inertial sensor 330 includes the outputs from the sensors 331 to 333, there may be at least one output with which the travel distance and orientation variation of the vehicle can be calculated. More specifically, the travel distance and the orientation variation may be calculated based on the output of the acceleration sensor 332 and the angular sensor 333.

For example, the movement-amount accumulating unit 340 sets the movement amount at the time of the detachment of the navigation unit 320 from the in-vehicle unit 322 to the initial value, and accumulates, according to a predetermined time unit, the movement amount obtained from the accumulated value of the outputs of the velocity sensor 331 and the angular velocity sensor 333. More specifically, the travel distance and the orientation variation that are obtained from the accumulated values of the outputs of the velocity sensor 331 and the angular acceleration sensor 333 are accumulated and updated according to the predetermined time unit. The accumulated values of outputs of the velocity sensor 331 and the angular acceleration sensor 333 are correlated to each other at each time unit to be stored in a memory included in the movement-amount accumulating unit 340. The position of the vehicle is calculated by reading, from the storing unit 341 explained hereinafter, the current position of the vehicle at the time of the detachment of the navigation unit 320 from the in-vehicle unit 322. Hereinafter, the "movement amount" includes the travel distance and the orientation variation.

The storing unit 341 stores the current position of the vehicle at the time of the detachment of the navigation unit 320 from the in-vehicle unit 322. For example, the storing unit 341 stores the information concerning the current position of the vehicle obtained based on the position information obtained by the GPS unit 304 and the inertial sensor 330 at the time of the disconnection of the connector 321.

The functions of the fixed unit 101 and the detachable unit 102 that functionally configure the position estimating apparatus 100 according to the embodiment are respectively implemented by the in-vehicle unit 322 and the navigation unit 320. The functions of the communication unit 103 and the detecting unit 104 are implemented by the navigation control unit 301, the communication unit 308, and the connector 321. The function of the accumulating unit 105 is implemented by the inertial sensor 330 and the movement-amount accumulating unit 340. The functions of the calculating unit 106, the estimating unit 107, the storing unit A 108, and the storing unit B 109 are respectively implemented by the GPS unit 304, the navigation control unit 301, the recording medium 305, and the storing unit 341.

### (Detachment and Attachment of Navigation Unit 320 from In-vehicle Unit 322)

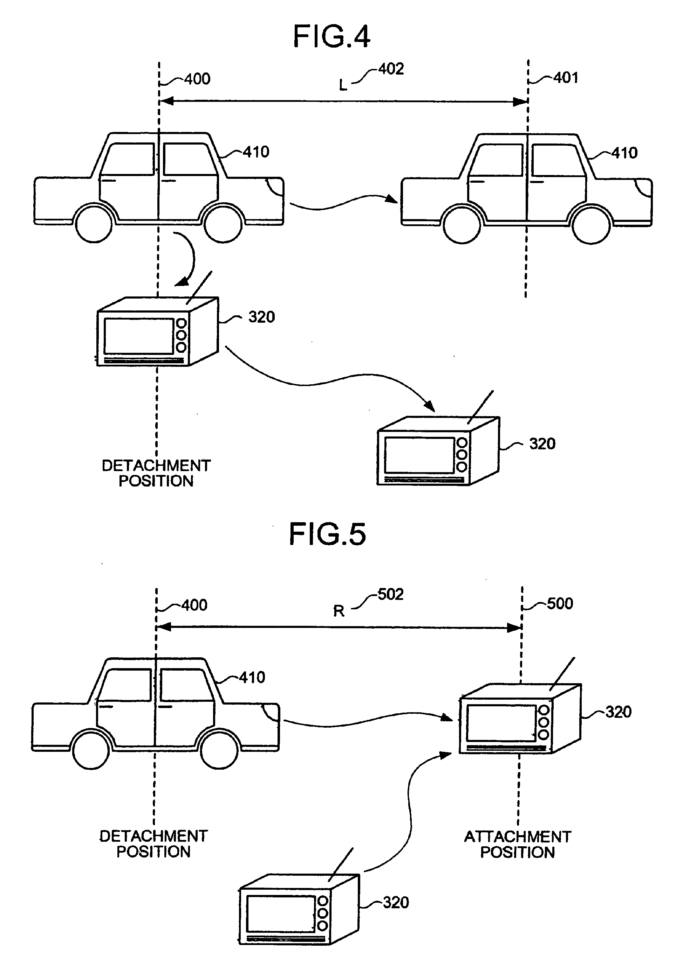

With reference to Figs. 4 to 7, detachment and attachment of the navigation unit 320 of the navigation apparatus 300 according to the example 1 is briefly explained. Fig. 4 is a schematic illustrating an example of detachment of the navigation unit according to the example 1.

As shown in Fig. 4, the navigation apparatus 300 (not shown) is mounted on a vehicle 410 to which the in-vehicle unit 322 (not shown) is fixed. The navigation unit 320 is detached from the in-vehicle unit 322 at a detachment position 400, and each of the units move. The movement of the navigation unit 320 after the detachment is, for example, a case where a user gets off the vehicle 410 at a parking lot and moves holding the navigation unit 320, and the vehicle 410 is moved by a parking lot staff.

When the navigation unit 320 is detached from the in-vehicle unit 322 at the detachment position 400, the current position at the time of the detachment is stored in the storing unit 341. When the vehicle 410 moves to a position 401, the movement amount L 402 can be calculated by the accumulated value of the output of the inertial sensor 330, the current position at the position 401 can be calculated based on the current position stored in the storing unit 341 at the time of the detachment and the accumulated value of the output of the inertial sensor 330. Further, the user can know the current position of the detached navigation unit 320 based on the positioning result by the GPS unit 304.

With reference to Fig. 5, attachment of the navigation unit 320 to the in-vehicle unit 322 is briefly explained. Fig. 5 is a schematic illustrating an example of attachment of the navigation unit according to the example 1.

As shown in Fig. 5, the vehicle 410 from which the navigation unit 320 is detached at the detachment position 400 moves to an attachment position 500 by a movement amount R 502, and the navigation unit 320 is attached to the navigation unit 320.

At the attachment position 500, the navigation unit 300 calculates the current position based on a positioning result by the GPS unit 304, performs more precise positioning by feedback of the current position stored in the storing unit 341 at the time of the detachment and the accumulated value of the output of the inertial sensor 330.

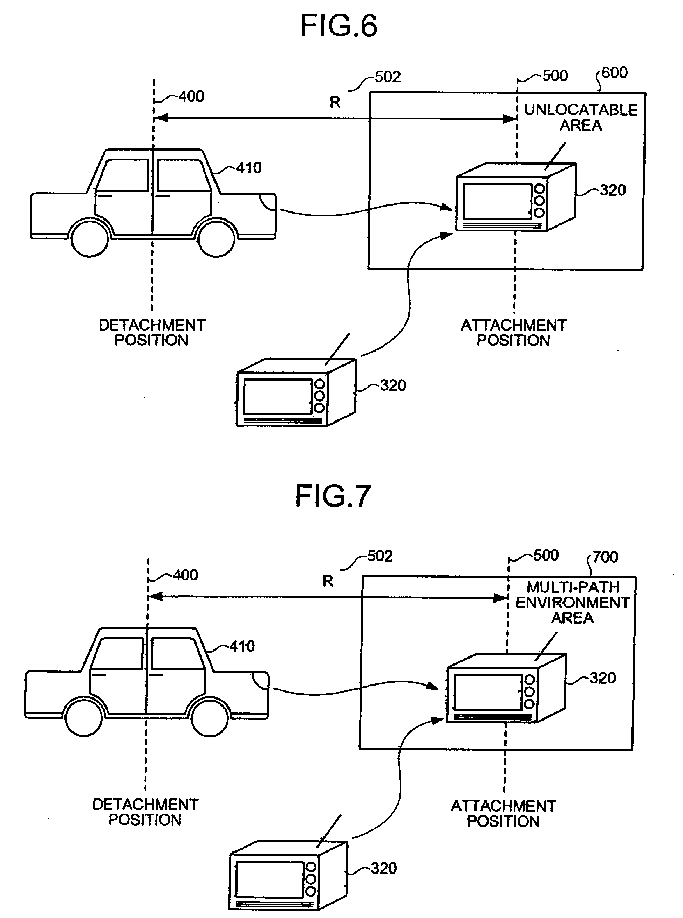

With reference to Fig. 6, a case in which the surroundings of the attachment position 500 at which the navigation unit 320 is attached to the in-vehicle 322 are included in an unlocatable area. Fig. 6 is a schematic illustrating an example when the attachment position according to the example 1 is in an unlocatable area.

As shown in Fig. 6, the attachment position 500 is in an unlocatable area 600. The unlocatable area 600 is, for example, an area within which the current position can not be pinpointed by the GPS unit 304, more specifically, inside a parking lot with a roof.

Although it is difficult for the navigation apparatus 300 to calculate the current position based on a positioning result of the GPS unit 304 in the unlocatable area 600, the navigation apparatus 300 can output the current position corresponding to the attachment position 500 by feedback of the current position stored in the storing unit 341 at the time of the detachment and the accumulated value of the output of the inertial sensor 330. Similarly, even when the power of the navigation unit 320 is OFF while on the move, the current position of the attachment position 500 can be output by feedback of the current position stored in the storing unit 341 at the time of the detachment and the accumulated value of the output of the inertial sensor 330.

With reference to Fig. 7, a case in which the surroundings of the attachment position 500 at which the navigation unit 320 is attached to the in-vehicle unit 322 are in a multipath area. Fig. 7 is a schematic illustrating an example when the attachment position according to the example 1 is in the multipath area.

As shown in Fig. 7, the attachment position 500 is in a multipath environment area 700. The multipath environment area 700 is, for example, an area within which the current position positioned by the GPS unit 304 is likely to include an error, more specifically, an area within which a signal is likely to be blocked or reflected by buildings.

Though the calculation of the current position based on the positioning result by the GPS unit 304 within the multipath environment area 700 includes an error, the navigation apparatus 300 can precisely output the current position of the attachment position 500 by feedback of the current position stored in the storing unit 341 at the time of the detachment and the accumulated value of the output of the inertial sensor 330. Specifically, for example, when the current position of the vehicle 410 is displayed on the display unit 303, displacement may not occur.

### (Process Performed by Navigation Apparatus 300)

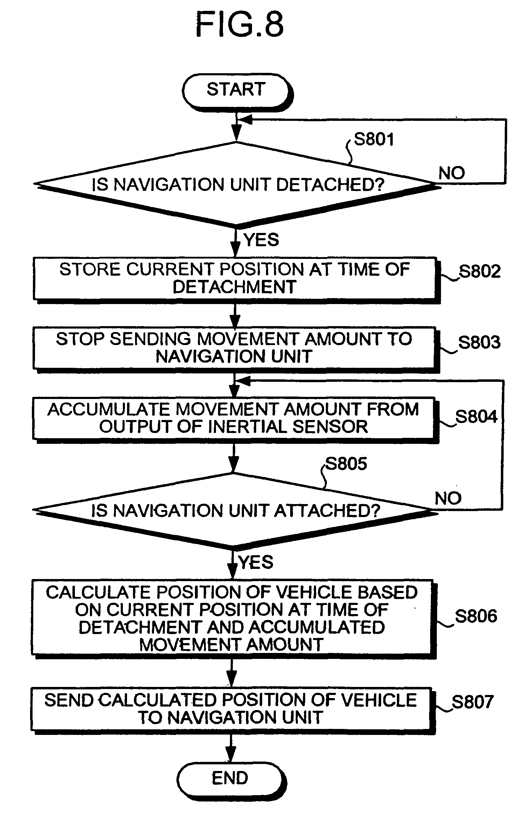

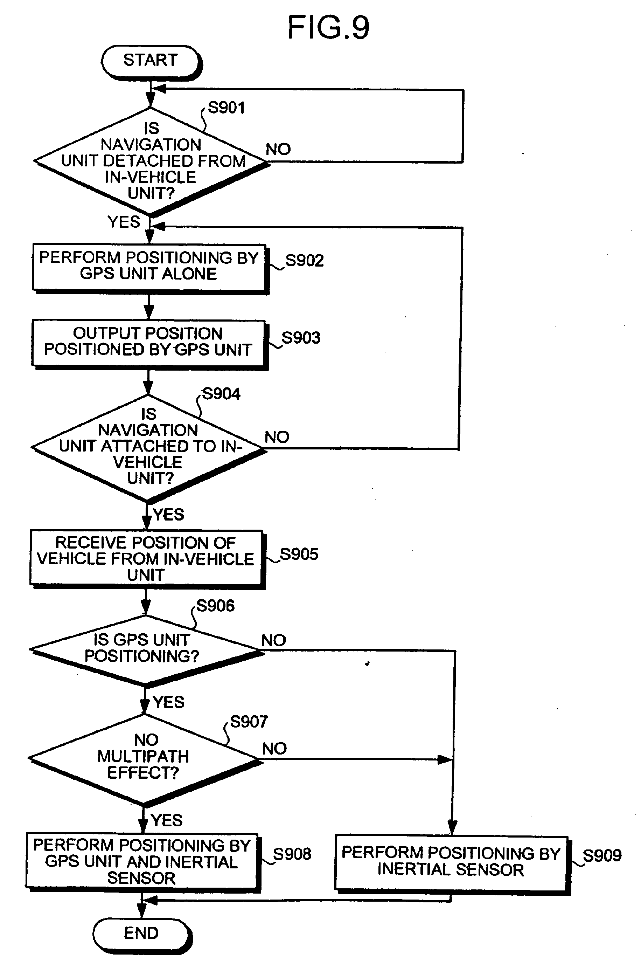

With reference to Figs. 8 and 9, processing performed by the navigation apparatus 300 according to the example 1 is explained. Fig. 8 is a flowchart of a process performed by the in-vehicle unit of the navigation apparatus according to the example 1. As shown in Fig. 8, the in-vehicle unit 322 judges whether the navigation unit 320 is detached (step S801). When the navigation unit 320 is detached (step S801: YES), the storing unit 341 stores the current position at the time of the detachment of the navigation unit 320 (step S802).

The current position at the time of the detachment of the navigation unit 320 is, for example, the current position calculated by the GPS unit 304 at the time of the disconnection of the connector 321 and output to the storing unit 341 through the communication unit 308.

Next, the in-vehicle unit 322 stops sending the movement amount to the navigation unit 320 (step S803). For example, the movement amount is calculated based on the accumulated value of the output of each of the sensors 331 to 333 included in the inertial sensor 330. Then, the movement-amount accumulating unit 340 accumulates the movement amount from the output of the inertial sensor 330 (step S804), and stores the accumulated movement amount in a memory (not shown). The movement-amount accumulating unit 340 accumulates the movement amount by setting the movement amount at the time of the detachment of the navigation unit 320 from the in-vehicle unit 322 to the initial value, and accumulating and updating, according to the predetermined time unit, the movement amount obtained by the accumulated value of the output of the velocity sensor 331 and the angular acceleration sensor 333. The accumulated movement amount at the predetermined time unit may be stored in a memory (not shown).

The in-vehicle unit 322 judges whether the navigation unit 320 is attached (step S805). When the navigation unit 320 is not attached (step S805: NO), the process returns to step S804 and repeats the accumulation of the movement amount.

When the navigation unit 320 is attached at step S805 (step S805: YES), the movement-amount accumulating unit 340 calculates the position of the vehicle based on the current position stored at the time of the detachment at step S802 and the accumulated movement amount (step S806).

Then, the position of the vehicle calculated at step S806 is sent to the navigation unit 320 (step S807), and a series of processing ends. Although it is explained in the example 1 that the position of the vehicle is calculated by the movement-amount accumulating unit 340 at step S806, the current position at the time of the detachment and the accumulated movement amount may be sent to the navigation unit 320 instead of calculating the position of the vehicle, and the position of the vehicle may be calculated by the navigation unit 320.

Fig. 9 is a flowchart of a process performed by the navigation unit of the navigation apparatus according to the example 1. As shown in Fig. 9, the navigation unit 320 judges whether the navigation unit 320 is detached from the in-vehicle unit 322 (step S901). When the navigation unit 320 is detached from the in-vehicle unit 322 (step S901: YES), the GPS unit 304 alone performs positioning (step S902).

The navigation unit 320 outputs the position positioned by the GPS unit 304 (step S903). The position positioned by the GPS unit 304 is output to the display unit 303 or to the speaker 312 through the audio output unit 307.

The navigation unit 320 judges whether the navigation unit 320 is attached to the in-vehicle unit 322 (step S904). When the navigation unit 320 is not attached to the in-vehicle unit 322 at step S904 (step S904: NO), the process returns to step S902 and repeats processing therefrom.

When the navigation unit 320 is attached to the in-vehicle unit 322 at step S904 (step S904: YES), the navigation control unit 301 receives the position of the vehicle from the in-vehicle unit 322 through the communication unit 308 (step S905), and judges whether the GPS unit 304 is positioning (step S906). The performance of positioning by the GPS unit 304 is judged by a state of the signal received from the GPS satellites.

When the GPS unit 304 is positioning at step S906 (step S906: YES), the navigation control unit 301 judges whether there is a multipath effect (step S907). A multipath effect is present when an error of the GPS unit 304 is likely to be included, and the presence of a multipath effect is judged based on the position preliminarily registered or deviation from the position of the vehicle received by the in-vehicle unit 322.

When the GPS unit 304 is not positioning at step S906 (step S906: NO), the inertial sensor 330 performs positioning (S909), and a series of processing ends.

When there is no multipath effect at step S907 (step S907: NO), the navigation apparatus 300 performs positioning by the GPS unit 304 and the inertial sensor 330 (step S908), and a series of processing ends.

When there is multipath effect at step S907 (step S907: NO), the inertial sensor 330 performs positioning (step S909), and a series of processing ends.

### [Example 2]

The example 2 of the present invention is explained. In the example 2, an example in which the position estimating apparatus of the present invention is implemented by the navigation apparatus 300 in which the recording medium 305 has the function of the storing unit 341 of the example 1 explained above is explained.

Since hardware configuration of the navigation apparatus according to the example 2 is similar to that of Fig. 3, detailed explanation thereof is omitted. In the navigation apparatus 300 according to the example 2, the function of the storing unit 341 of the in-vehicle unit 322 is implemented by the recording medium 305 of the navigation apparatus 320.

As the detachment and attachment of the navigation unit 320 from and to the in-vehicle unit 322 is similar to that of Figs. 5 to 7 in the example 1, detailed explanation thereof is omitted. In the example 2, since the storing unit 341 is not included in the in-vehicle unit 322, the current position of the position 401 after the movement from the detachment position is not calculated, the positioning is performed after the attachment of the navigation unit 320 to the in-vehicle unit 322.

Specifically, for example, as shown in Fig. 5, at the detachment position 400 where the navigation unit 320 is detached from the in-vehicle unit 322, the current position at the time of the detachment is stored in the recording medium 305. Then, the navigation apparatus 300 calculates the current position at the attachment position 500 based on the positioning result by the GPS unit 304, and performs the positioning by feedback of the current position stored in the recording medium 305 at the time of the detachment and the accumulated value of the output of the inertial sensor 330.

### (Process Performed by Navigation Apparatus 300)

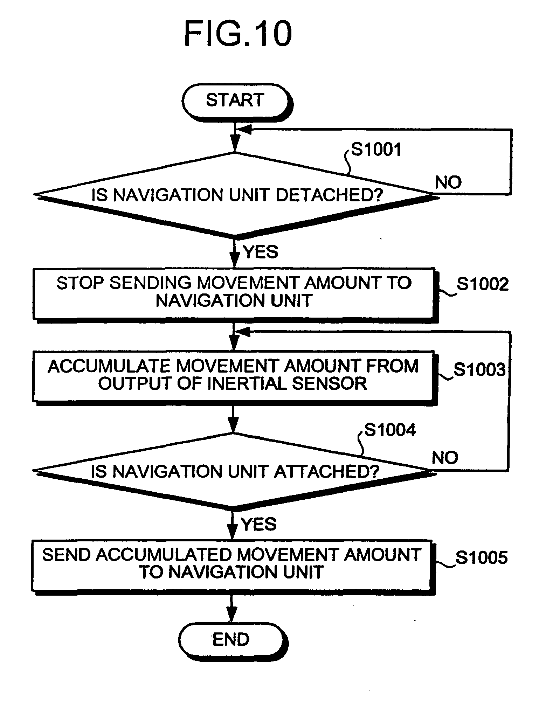

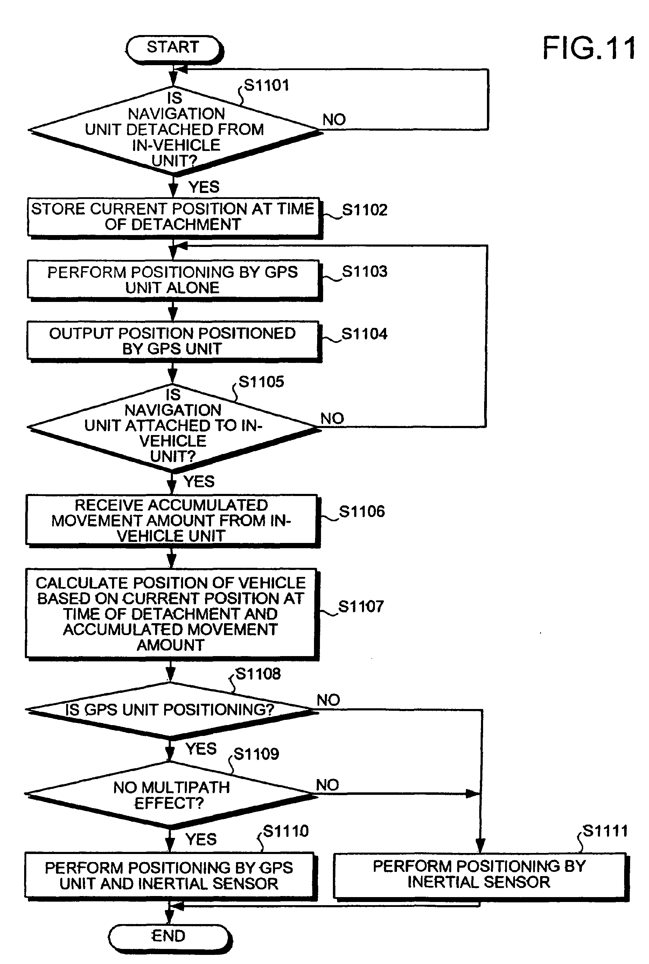

With reference to Figs. 10 and 11, processes performed by the navigation apparatus 300 according to the example 2 are explained. Fig. 10 is a flowchart of processing performed by the in-vehicle unit of the navigation apparatus according to the example 2. As shown in Fig. 10, the in-vehicle unit 322 judges whether the navigation unit 320 is detached from the in-vehicle unit 322 (step S1001). When the navigation unit 320 is detached from the in-vehicle unit 322 (step S1001: YES), the in-vehicle unit 322 stops sending the movement amount to the navigation unit 320 (step S1002). For example, the movement amount is calculated based on the accumulated value of the output of each of the sensors 331 to 333 of the inertial sensor 330.

The movement-amount accumulating unit 340 accumulates the movement amount based on the output of the inertial sensor 330 (step S1003), and stores the accumulated movement amount in a memory (not shown). For example, the movement amount at the time of the detachment of the navigation unit 320 from the in-vehicle unit 322 is set to the initial value, and updated according to a predetermined time unit. For example, the calculated movement amount at the predetermined time unit may be stored in the memory (not shown).

The in-vehicle unit 322 judges whether the navigation unit 320 is attached to the in-vehicle unit 322 (step S1004). When the navigation unit 320 is not attached to the in-vehicle unit 322 (step S1004: NO), the process returns to step S1003 and repeats the accumulation of the movement amount.

When the navigation unit 320 is attached at step S1004 (step S1004: YES), the movement-amount accumulating unit 340 sends the accumulated movement amount to the navigation unit 320 (step S1005), and a series of processing ends.

Fig. 11 is a flowchart of processing performed by the navigation unit of the navigation apparatus according to the example 2. As shown in the flowchart of Fig. 11, the navigation unit 320 judges whether the navigation unit 320 is detached from the in-vehicle unit 322 (step S1101). When the navigation unit 320 is detached from the in-vehicle unit 322 (step S1101: YES), the current position at the time of the detachment is stored in the recording medium 305 (step S1102).

The navigation unit 320 performs positioning by the GPS unit 304 alone (step S1103), and outputs the position positioned by the GPS unit 304 (step S1104). For example, the position positioned by the GPS unit 304 is output to the display unit 303 or the speaker 312 through the audio output unit 307.

The navigation unit 320 judges whether the navigation unit 320 is attached to the in-vehicle unit 322 (step S1105). When the navigation unit 320 is not attached to the in-vehicle unit 322 at step S1105 (step S1105: NO), the process returns to step S1103 and repeats thereform.

When the navigation unit 320 is attached to the in-vehicle unit 322 at step S1105 (step S1105: YES), the navigation control unit 301 receives the accumulated movement amount from the in-vehicle unit 322 through the communication unit 308 (step S1106), and calculates the position of the vehicle based on the current position stored at step S1102 at the time of the detachment and the accumulated movement amount (step S1107).

The navigation control unit 301 judges whether the GPS unit 304 is positioning (step S1108). The performance of positioning by the GPS unit 304 is judged by the state of a signal received by the GPS satellites.

When the GPS unit 304 is positioning at step S1108 (step S1108: YES), the navigation control unit 301 judges whether there is a multipath effect (step S1109). The multipath effect is present where an error of the GPS unit 304 is likely to be included, for example, and the presence of the multipath effect is judged based on the position preliminarily registered or deviation from the position of the vehicle received by the in-vehicle unit 322.

When the GPS unit 304 is not positioning at step S1108 (step S1108: NO), the inertial sensor 330 performs positioning (step S1111), and a series of processing ends.

When there is no multipath effect at step S1109 (step S1109: YES), the navigation apparatus 300 performs positioning by the GPS unit 304 and the inertial sensor 330 (step S1110), and a series of processing ends.

When there is the multipath effect at step S1109 (step S1109: NO), the inertial sensor 330 performs positioning (step S1111), and a series of processing ends.

As explained above, according to the present invention, the current position of the mobile object at the time of the detachment of the detachable unit 102 from the fixed unit 101 is estimated, and the movement amount while the detachable unit 102 is detached from the fixed unit 101 is accumulated. The current position of the mobile object at the time of the attachment of the detachable unit 102 can be estimated based on the current position of the mobile object at the time of the detachment of the detachable unit 102 and the movement amount while the detachable unit 102 is detached. Therefore, even if the fixed unit 101 moves while the detachable unit 102 is detached, the current position of the mobile object at the time of the attachment of the detachable unit 102 can be precisely estimated.

Since the in-vehicle unit 322 stores the current position at the time of the detachment of the navigation unit 320 in the storing unit 341, and the movement-amount accumulating unit 340 accumulates the movement amount based on the output of the inertial sensor 330, the current position of the in-vehicle unit 322 can be calculated even when the navigation unit 320 is not attached to the in-vehicle unit 322.

Since the navigation unit 320 performs positioning by the GPS unit 304 and outputs position information to the display unit 303, the current position of the navigation unit 320 can be calculated without the inertial sensor 330.

Since the in-vehicle unit 322 can estimate the current position of the vehicle 410 at the time of the attachment of the navigation unit 320 based on the positioning performed by the GPS unit 304 at the time of the attachment and the accumulated movement amount while the navigation unit 320 is detached, the current position of the vehicle 410 can be precisely calculated. Further, the current position of the vehicle 410 can be calculated even in an area unlocatable by the GPS unit 304 and a multipath area.

The movement-amount accumulating unit 340 can calculate the current position based on the current position stored in the storing unit 341 at the time of the detachment and the accumulated movement amount, when the storing unit 341 is included in the in-vehicle unit 322. Therefore, another navigation unit 320 can be attached to the in-vehicle unit 322, and an exchange of the navigation unit 320 attached to the vehicle 410 can be implemented.

When the storing unit 341 is not included the in-vehicle unit 322 and the detachment position is stored in the recording medium 305, simplicity of the processing unit of the in-vehicle unit 322 can be achieved.

Although the current position of the vehicle 410 is calculated by detecting the detachment of the navigation unit 320 from the in-vehicle unit 322 as explained above, the various information may be wirelessly transferred between the in-vehicle unit 322 and the navigation unit 320. Due to the wireless communication, even while the navigation unit 320 is detached, vehicle management can be performed by confirming the position of the vehicle 410 by the navigation unit 320.

The position estimating method explained in the present embodiment can be implemented by a computer such as a personal computer and a workstation executing a program that is prepared in advance. This program is recorded on a computer-readable recording medium such as a hard disk, a flexible disk, a CD-ROM, an MO, and a DVD, and is executed by being read out from the recording medium by a computer. This program can be a transmission medium that can be distributed through a network such as the Internet.

## Claims

1. A position estimating apparatus (100; 300) that includes a fixed unit (101; 322) fixed on a mobile object (410) and a detachable navigation unit (102; 320) detachable from the fixed unit, and is configured for estimating a current position of the mobile object based on a current position of the mobile object calculated using satellite navigation and a movement amount of the mobile object calculated using inertial navigation, wherein
the fixed unit includes an accumulating unit (105; 340) configured for accumulating the movement amount of the mobile object calculated by an inertial sensor (330),
the detachable navigation unit includes
a GPS device (304),
a calculating unit (106; 301) configured for calculating a current position of the mobile object by the GPS device, and
an estimating unit (107; 301) configured for estimating the current position of the mobile object based on the movement amount of the mobile object accumulated by the accumulating unit and the current position of the mobile object calculated by the calculating unit, and
the position estimating apparatus further comprises:
a detecting unit (104; 301) configured for detecting a detachment of the detachable navigation unit from the fixed unit; and
a communication unit (103) configured for sending the movement amount accumulated by the accumulating unit from the fixed unit to the detachable navigation unit,
**characterized in that** the estimating unit is adapted to estimate, when the detecting unit has detected the detachment of the detachable navigation unit from the fixed unit, the current position of the mobile object upon re-attachment of the detachable navigation unit to the fixed unit based on the current position of the mobile object estimated upon the detachment of the detachable navigation unit from the fixed unit, and the movement amount accumulated by the accumulating unit while the detachable navigation unit was detached from the fixed unit.

2. The position estimating apparatus (100; 300) according to claim 1, wherein
the detachable navigation unit (102; 320) includes
a storing unit (108; 305) configured for storing the current position of the mobile object (410) estimated by the estimating unit (107; 301) when the detecting unit (104; 301) detects the detachment of the detachable navigation unit from the fixed unit (101; 322),
wherein the estimating unit is further adapted to estimate, when the detecting unit detects the re-attachment of the detachable navigation unit to the fixed unit, the current position of the mobile object upon the re-attachment of the detachable navigation unit to the fixed unit based on the current position of the mobile object estimated by the estimating unit upon the detachment and stored by the storing unit, and the movement amount accumulated by the accumulating unit (105; 340) while the detachable navigation unit was detached from the fixed unit.

3. The position estimating apparatus (100; 300) according to claim 1, wherein
the fixed unit (101; 322) includes
a storing unit (109; 341) configured for storing the current position of the mobile object (410) estimated by the estimating unit (107; 301) when the detecting unit (104; 301) detects the detachment of the detachable navigation unit (102; 320) from the fixed unit,
wherein the estimating unit is further adapted to estimate, when the detecting unit detects the re-attachment of the detachable navigation unit to the fixed unit, the current position of the mobile object upon the re-attachment of the detachable navigation unit to the fixed unit based on the current position of the mobile object estimated by the estimating unit upon the detachment and stored by the storing unit, and the movement amount accumulated by the accumulating unit (105; 340) while the detachable navigation unit was detached from the fixed unit.

4. The position estimating apparatus (100; 300) according to any one of claims 1 to 3, wherein the communication unit (103) is adapted to wirelessly communicate with the fixed unit (101; 322) and the detachable navigation unit (102; 320).

5. A position estimating method of estimating a current position of a mobile object (410) on which a fixed unit (101; 322) is mounted, a detachable navigation unit (102; 320) being detachable from the fixed unit, based on a current position of the mobile object calculated using satellite navigation and a movement amount of the mobile object calculated using inertial navigation, the position estimating method comprising:
an accumulating step (S203; S804; S1003) of accumulating the movement amount of the mobile object calculated by an inertial sensor (330) included in the fixed unit;
a calculating step (S202; S902, S1103) of calculating a current position of the mobile object by a GPS device (304) included in the detachable navigation unit;
a first estimating step of estimating the current position of the mobile object based on the movement amount of the mobile object accumulated at the accumulating step and the current position of the mobile object calculated at the calculating step;
a detecting step (S201; S901; S1101) of detecting a detachment of the detachable navigation unit from the fixed unit; and
a communication step of sending the movement amount accumulated at the accumulating step from the fixed unit to the detachable navigation unit;
**characterised by** a second estimating step of estimating (S205; S806), when the detachment of the detachable navigation unit from the fixed unit has been detected at the detecting step, the current position of the mobile object upon re-attachment of the detachable navigation unit to the fixed unit based on the current position of the mobile object estimated at the first estimating step upon the detachment of the detachable navigation unit from the fixed unit, and the movement amount accumulated at the accumulating step while the detachable navigation unit was detached from the fixed unit.

6. A position estimating program that causes a computer to execute the position estimating method according to claim 5.

7. A computer-readable recording medium that stores therein the position estimating program according to claim 6.

8. A detachable navigation unit (102) detachable from a fixed unit (101) fixed on a mobile object (410), said detachable navigation unit and said fixed unit being part of a position estimating apparatus (100) configured for estimating a current position of the mobile object, comprising:
a GPS device;
a calculating unit (106) configured for calculating a current position of the mobile object by using the GPS device;
an estimating unit (107) configured for estimating the current position of the mobile object based on a movement amount obtained from the fixed unit via a communication unit (103) of the position estimating apparatus (100) and the current position calculated by the calculating unit; and
a detecting unit (104) configured for detecting detachment from the fixed unit;
**characterised in that** the movement amount is the amount of movement of the mobile object while the detachable navigation unit is detached from the fixed unit,
wherein the estimating unit is adapted to estimate, when the detecting unit detects re-attachment to the fixed unit, the current position of the mobile object upon the re-attachment to the fixed unit based on the movement amount and the position of the mobile object at the time of detachment of the detachable navigation unit from the fixed unit.

9. The detachable navigation unit (102) according to claim 8, wherein the communication unit (103) is also adapted to obtain, from the fixed unit (101), upon re-attachment of the detachable navigation unit to the fixed unit, the position of the mobile object at the time of detachment of the detachable navigation unit from the fixed unit, for use by the estimating unit (107) in estimating the current position of the mobile object upon the re-attachment to the fixed unit.

10. The detachable navigation unit (102) according to claim 8, further comprising a storing unit (108) configured for storing the position of the mobile object (410) estimated by the estimating unit (107) at the time of detachment of the detachable navigation unit from the fixed unit (101), for use by the estimating unit (107) in estimating the current position of the mobile object upon the re-attachment to the fixed unit.

11. A fixed unit (101), adapted to be fixed on a mobile object (410), that transmits, to the detachable navigation unit (102) as claimed in claim 8, a movement amount used for estimating a current position of the mobile object, comprising:
an accumulating unit (105) adapted to accumulate the movement amount while the detachable navigation unit is detached from the fixed unit; and
wherein the fixed unit is adapted to feed back to the detachable navigation unit the movement amount that is used by the estimating unit (107) to estimate, when the detecting unit (104) detects re-attachment of the detachable navigation unit, the current position of the mobile object upon the re-attachment to the detachable navigation unit.

12. The fixed unit (101) according to claim 11, further comprising a storing unit (109) adapted to store the position of the mobile object at the time of detachment of the detachable navigation unit from the fixed unit,
wherein the fixed unit is also adapted to feed back to the detachable navigation unit, from the storing unit, the position of the mobile unit at the time of detachment of the detachable navigation unit from the fixed unit, for use by the estimating unit (107) in estimating the current position of the mobile object upon the re-attachment to the fixed unit.

## Patentansprüche

1. Einrichtung (100; 300) zur Positionsschätzung, die eine feste Einheit (101; 322), die an einem mobilen Objekt (410) befestigt ist und eine lösbare Navigationseinheit (102; 320) einschließt, die von der festen Einheit lösbar und konfiguriert ist, eine aktuelle Position des mobilen Objekts, auf einer aktuellen Position des mobilen Objekts beruhend, die unter Verwendung von Satellitennavigation berechnet wurde und eines Bewegungsausmaßes des mobilen Objekts, das unter Verwendung von Inertialnavigation berechnet wurde, zu schätzen, wobei
die feste Einheit eine Akkumuliereinheit (105; 340) einschließt, die konfiguriert ist, das Bewegungsausmaß des mobilen Objekts zu akkumulieren, das von einem Inertialsensor (330) berechnet wurde,
wobei die lösbare Navigationseinheit einschließt:
ein GPS-Gerät (304),
eine Recheneinheit (106; 301), die konfiguriert ist, eine aktuelle Position des mobilen Objekts mittels des GPS-Geräts zu berechnen,
und
eine Schätzungseinheit (107; 301), die konfiguriert ist, die aktuelle Position des mobilen Objekts, auf dem Bewegungsausmaß des mobilen Objekts beruhend, das von der Akkumuliereinheit akkumuliert wurde und die aktuelle Position des mobilen Objekts zu schätzen, die von der Recheneinheit berechnet wurde, und
die Einrichtung zur Positionsschätzung weiter umfasst:
eine Detektionseinheit (104; 301), die konfiguriert ist, eine Ablösung der lösbaren Navigationseinheit von der festen Einheit zu detektieren; und
eine Kommunikationseinheit (103), die konfiguriert ist, ein von der Akkumuliereinheit akkumuliertes Bewegungsausmaß von der festen Einheit an die lösbare Navigationseinheit zu senden,
**dadurch gekennzeichnet, dass** die Schätzungseinheit angepasst ist, wenn die Detektionseinheit die Ablösung der lösbaren Navigationseinheit von der festen Einheit detektiert hat, die aktuelle Position des mobilen Objekts nach Wiederanbringung der lösbaren Navigationseinheit an die feste Einheit, auf der aktuellen Position des mobilen Objekts beruhend zu schätzen, die nach der Ablösung der lösbaren Navigationseinheit von der festen Einheit und dem von der Akkumuliereinheit akkumulierten Bewegungsausmaß geschätzt wurde, während die lösbare Navigationseinheit von der festen Einheit gelöst war.

2. Einrichtung (100; 300) zur Positionsschätzung nach Anspruch 1, wobei die lösbare Navigationseinheit (102; 320) einschließt
eine Speichereinheit (108; 305), die zum Speichern der aktuellen Position des mobilen Objekts (410) konfiguriert ist, die von der Schätzungseinheit (107; 301) geschätzt wurde, wenn die Detektionseinheit (104; 301) die Ablösung der lösbaren Navigationseinheit von der festen Einheit (101; 322) detektiert,
wobei die Schätzungseinheit weiter angepasst ist, wenn die Detektionseinheit die Wiederanbringung der lösbaren Navigationseinheit an die feste Einheit detektiert, die aktuelle Position des mobilen Objekts nach der Wiederanbringung der lösbaren Navigationseinheit an die feste Einheit, auf der aktuellen Position des mobilen Objekts beruhend, die von der Schätzungseinheit nach der Ablösung und von der Speichereinheit gespeichert wurde und das von der Akkumuliereinheit (105; 340) akkumulierte Bewegungsausmaß zu schätzen, während die lösbare Navigationseinheit von der festen Einheit gelöst war.

3. Einrichtung (100; 300) zur Positionsschätzung nach Anspruch 1, wobei die feste Einheit (101; 322) einschließt
eine Speichereinheit (109; 341), die konfiguriert ist, die aktuelle Position des mobilen Objekts (410) zu speichern, die von der Schätzungseinheit (107; 301) geschätzt wurde, wenn die Detektionseinheit (104; 301) die Ablösung der lösbaren Navigationseinheit (102; 320) von der festen Einheit detektiert,
wobei die Schätzungseinheit weiter angepasst ist, wenn die Detektionseinheit die Wiederanbringung der lösbaren Navigationseinheit an die feste Einheit detektiert, die aktuelle Position des mobilen Objekts nach der Wiederanbringung der lösbaren Navigationseinheit an die feste Einheit auf der aktuellen Position des mobilen Objekts beruhend, die von der Schätzungseinheit nach der Ablösung und von der Speichereinheit gespeichert wurde und das von der Akkumuliereinheit (105; 340) akkumulierte Bewegungsausmaß zu schätzen, während die lösbare Navigationseinheit von der festen Einheit gelöst war.

4. Einrichtung (100; 300) zur Positionsschätzung nach einem beliebigen der Ansprüche 1 bis 3, wobei die Kommunikationseinheit (103) angepasst ist, drahtlos mit der festen Einheit (101; 322) und der lösbaren Navigationseinheit (102; 320) zu kommunizieren.

5. Verfahren zur Positionsschätzung zum Schätzen einer aktuellen Position eines mobilen Objekts (410), an das eine feste Einheit (101; 322) montiert ist, wobei eine lösbare Navigationseinheit (102; 320) von der festen Einheit lösbar ist, auf einer aktuellen Position des mobilen Objekts beruhend, die unter Verwendung von Satellitennavigation berechnet wurde und eines Bewegungsausmaßes des mobilen Objekts, das unter Verwendung von Inertialnavigation berechnet wurde, wobei das Verfahren zur Positionsschätzung umfasst:
einen Akkumulierschritt (S203; S804; S1003) zum Akkumulieren des Bewegungsausmaßes des mobilen Objekts, das von einem Inertialsensor (330) berechnet wurde, der in der festen Einheit inbegriffen ist;
einen Rechenschritt (S202; S902, S1103) zur Berechnung einer aktuellen Position des mobilen Objekts durch ein GPS-Gerät (304), das in der lösbaren Navigationseinheit inbegriffen ist;
einen ersten Schätzungsschritt zum Schätzen der aktuellen Position des mobilen Objekts, auf dem Bewegungsausmaß des mobilen Objekts, das beim Akkumulierschritt akkumuliert wurde und der aktuellen Position des mobilen Objekts beruhend, die beim Rechenschritt berechnet wurde;
einen Detektionsschritt (S201; S901; S1101) zum Detektieren einer Ablösung der lösbaren Navigationseinheit von der festen Einheit; und
einen Kommunikationsschritt zum Senden des beim Akkumulierschritt akkumulierten Bewegungsausmaßes von der festen Einheit an die lösbare Navigationseinheit;
**gekennzeichnet durch** einen zweiten Schätzungsschritt (S205; S806) zum Schätzen, wenn die Ablösung der lösbaren Navigationseinheit von der festen Einheit beim Detektionsschritt detektiert worden ist, der aktuellen Position des mobilen Objekts nach Wiederanbringung der lösbaren Navigationseinheit an die feste Einheit auf der aktuellen Position des mobilen Objekts beruhend, die beim ersten Schätzungsschritt nach der Ablösung der lösbaren Navigationseinheit von der festen Einheit und dem beim Akkumulierschritt akkumulierten Bewegungsausmaß geschätzt wurde, während die lösbare Navigationseinheit von der festen Einheit gelöst war.

6. Programm zur Positionsschätzung, das einen Computer veranlasst, das Verfahren zur Positionsschätzung nach Anspruch 5 auszuführen.

7. Computerlesbares Aufzeichnungsmedium, welches das Programm zur Positionsschätzung nach Anspruch 6 darin speichert.

8. Lösbare Navigationseinheit (102), die von einer festen an einem mobilen Objekt (410) befestigten Einheit (101) lösbar ist, wobei die besagte lösbare Navigationseinheit und die besagte feste Einheit ein Teil einer Einrichtung (100) zur Positionsschätzung sind, die konfiguriert ist, eine aktuelle Position des mobilen Objekts zu schätzen, umfassend:
ein GPS-Gerät;
eine Recheneinheit (106), die konfiguriert ist, eine aktuelle Position des mobilen Objekts mittels des GPS-Geräts zu berechnen,
eine Schätzungseinheit (107), die konfiguriert ist, die aktuelle Position des mobilen Objekts, auf einem Bewegungsausmaß beruhend, das von der festen Einheit über eine Kommunikationseinheit (103) der Einrichtung (100) zur Positionsschätzung erhalten wurde und die aktuelle Position, die von der Recheneinheit berechnet wurde, zu schätzen; und
eine Detektionseinheit (104), die konfiguriert ist, die Ablösung von der festen Einheit zu detektieren;
**dadurch gekennzeichnet, dass** das Bewegungsausmaß das Ausmaß der Bewegung des mobilen Objekts ist, während die lösbare Navigationseinheit von der festen Einheit gelöst ist,
wobei die Schätzungseinheit angepasst ist, wenn die Detektionseinheit die Wiederanbringung an die feste Einheit detektiert, die aktuelle Position des mobilen Objekts nach der Wiederanbringung an die feste Einheit, auf dem Bewegungsausmaß und der Position des mobilen Objekts zur Zeit der Ablösung der lösbaren Navigationseinheit von der festen Einheit beruhend, zu schätzen.

9. Lösbare Navigationseinheit (102) nach Anspruch 8, wobei die Kommunikationseinheit (103) außerdem angepasst ist, von der festen Einheit (101), nach der Wiederanbringung der lösbaren Navigationseinheit an die feste Einheit, die Position des mobilen Objekts zur Zeit der Ablösung der lösbaren Navigationseinheit von der festen Einheit zu erhalten, die von der Schätzungseinheit (107) beim Schätzen der aktuellen Position des mobilen Objekts nach der Wiederanbringung an die feste Einheit verwendet wird.

10. Lösbare Navigationseinheit (102) nach Anspruch 8, die weiter eine Speichereinheit (108) umfasst, die konfiguriert ist, die Position des mobilen Objekts (410) zu speichern, die von der Schätzungseinheit (107) zur Zeit der Ablösung der lösbaren Navigationseinheit von der festen Einheit (101) geschätzt wurde, um von der Schätzungseinheit (107) beim Schätzen der aktuellen Position des mobilen Objekts nach der Wiederanbringung an die feste Einheit verwendet zu werden.

11. Feste Einheit (101), die angepasst ist, an ein mobiles Objekt (410) befestigt zu werden, die wie in Anspruch 8 beansprucht, ein Bewegungsausmaß an die lösbare Navigationseinheit (102) sendet, das zum Schätzen einer aktuellen Position des mobilen Objekts verwendet wird, umfassend:
eine Akkumuliereinheit (105), die angepasst ist, das Bewegungsausmaß zu akkumulieren, während die lösbare Navigationseinheit von der festen Einheit gelöst ist; und
wobei die feste Einheit angepasst ist, das Bewegungsausmaß an die lösbare Navigationseinheit rückzumelden, das von der Schätzungseinheit (107) verwendet wird, wenn die Detektionseinheit (104) die Wiederanbringung der lösbaren Navigationseinheit detektiert, die aktuelle Position des mobilen Objekts nach der Wiederanbringung an die lösbare Navigationseinheit zu schätzen.

12. Feste Einheit (101) nach Anspruch 11, die weiter eine Speichereinheit (109) umfasst, die angepasst ist, die Position des mobilen Objekts zur Zeit der Ablösung der lösbaren Navigationseinheit von der festen Einheit zu speichern,
wobei die feste Einheit außerdem angepasst ist, an die lösbare Navigationseinheit, ab der Speichereinheit, die Position der mobilen Einheit zur Zeit der Ablösung der lösbaren Navigationseinheit von der festen Einheit, zur Verwendung von der Schätzungseinheit (107) beim Schätzen der aktuellen Position des mobilen Objekts nach der Wiederanbringung an die feste Einheit, rückzumelden.

## Revendications

1. Appareil d'estimation de position (100; 300) comprenant une unité fixe (101; 322) qui est fixée sur un objet mobile (410) et une unité de navigation détachable (102; 320) qui peut être détachée de l'unité fixe, et qui est configurée de manière à estimer la position actuelle de l'objet mobile sur la base de la position actuelle de l'objet mobile qui a été calculée au moyen de navigation satellitaire et sur la base aussi d'une quantité de mouvement de l'objet mobile qui a été calculée au moyen de navigation par inertie, **caractérisé en ce que**
l'unité fixe comprend une unité d'accumulation (105; 340) configurée de manière à totaliser la quantité de mouvement de l'objet mobile qui a été calculée par un capteur à inertie (330),
l'unité de navigation détachable comprend
un dispositif GPS (304),
une unité de calcul (106; 301) configurée de manière à calculer la position actuelle de l'objet mobile au moyen du dispositif GPS, et
une unité d'estimation (107; 301) configurée de manière à estimer la position actuelle de l'objet mobile sur la base de la quantité de mouvement de l'objet mobile qui a été totalisée par l'unité d'accumulation et sur la base aussi de la position actuelle de l'objet mobile qui a été calculée par l'unité de calcul, et
l'appareil d'estimation de position comprend par ailleurs:
une unité de détection (104; 301) configurée de manière à détecter le détachement de l'unité de navigation détachable à partir de l'unité fixe; et
une unité de communication (103) configurée de manière à transmettre, de l'unité fixe à l'unité de navigation détachable, la quantité de mouvement totalisée par l'unité d'accumulation,
**caractérisé en ce que** l'unité d'estimation est adaptée de manière à estimer, au moment où l'unité de détection détecte le détachement de l'unité de navigation détachable de l'unité fixe, la position actuelle de l'objet mobile dès que l'unité de navigation détachable aura été rattachée à l'unité fixe, ceci sur la base de la position actuelle de l'objet mobile estimée au moment du détachement de l'unité de navigation détachable de l'unité fixe, et aussi sur la base de la quantité de mouvement totalisée par l'unité d'accumulation pendant que l'unité de navigation détachable était détachée de l'unité fixe.

2. Appareil d'estimation de position (100; 300) selon la revendication 1, **caractérisé en ce que**
l'unité de navigation détachable (102; 320) comprend
une unité de stockage (108; 305) configurée de manière à stocker la position actuelle de l'objet mobile (410) estimée par l'unité d'estimation (107; 301) au moment où l'unité de détection (104; 301) détecte le détachement de l'unité de navigation détachable de l'unité fixe (101; 322),
**caractérisé en ce que** l'unité d'estimation est par ailleurs adaptée de manière à estimer, au moment où l'unité de détection détecte le rattachement de l'unité de navigation détachable à l'unité fixe, la position actuelle de l'objet mobile dès le rattachement de l'unité de navigation détachable à l'unité fixe, ceci sur la base de la position actuelle de l'objet mobile estimée par l'unité d'estimation au moment du détachement et stockée par l'unité de stockage, et sur la base aussi de la quantité de mouvement totalisée par l'unité d'accumulation (105; 340) pendant que l'unité de navigation détachable était détachée de l'unité fixe.

3. Appareil d'estimation de position (100; 300) selon la revendication 1, **caractérisé en ce que**
l'unité fixe (101; 322) comprend
une unité de stockage (109; 341) configurée de manière à stocker la position actuelle de l'objet mobile (410) estimée par l'unité d'estimation (107; 301) au moment où l'unité de détection (104; 301) détecte le détachement de l'unité de navigation détachable (102; 320) de l'unité fixe,
**caractérisée en ce que** l'unité d'estimation est par ailleurs adaptée de manière à estimer, au moment où l'unité de détection détecte le rattachement de l'unité de navigation détachable à l'unité fixe, la position actuelle de l'objet mobile dès le rattachement de l'unité de navigation détachable à l'unité fixe, ceci sur la base de la position actuelle de l'objet mobile estimée par l'unité d'estimation au moment du détachement et stockée par l'unité de stockage, et sur la base aussi de la quantité de mouvement totalisée par l'unité d'accumulation (105; 340) pendant que l'unité de navigation détachable était détachée de l'unité fixe.

4. Appareil d'estimation de position (100; 300) selon l'une quelconque des revendications 1 à 3, **caractérisé en ce que** l'unité de communication (103) est adaptée de manière à se mettre en communication sans fil avec l'unité fixe (101; 322) et l'unité de navigation détachable (102; 320).

5. Méthode d'estimation de position servant à estimer la position actuelle d'un objet mobile (410) sur lequel est montée une unité fixe (101; 322), une unité de navigation détachable (102; 320) pouvant être détachée de l'unité fixe, ceci sur la base de la position actuelle de l'objet mobile qui a été calculée au moyen de navigation satellitaire et aussi d'une quantité de mouvement de l'objet mobile qui a été calculée au moyen de navigation par inertie, la méthode d'estimation de position comportant:
une étape de totalisation (S203, S804; S1003) qui consiste à totaliser la quantité de mouvement de l'objet mobile qui a été calculée au moyen d'un capteur à inertie (330) faisant partie de l'unité fixe;
une étape de calcul (S202, S902; S1103) qui consiste à calculer la position actuelle de l'objet mobile au moyen d'un dispositif GPS (304) faisant partie de l'unité de navigation détachable;
une première étape d'estimation qui consiste à estimer la position actuelle de l'objet mobile sur la base de la quantité de mouvement de l'objet mobile totalisée lors de l'étape de totalisation et aussi de la position actuelle de l'objet mobile calculée totalisée lors de l'étape de calcul;
une étape de détection (S201; S901; S1101) qui consiste à détecter le détachement de l'unité de navigation détachable de l'unité fixe; et
une étape de communication qui consiste à transmettre, de l'unité fixe à l'unité de navigation détachable, la quantité de mouvement totalisée lors de l'étape de totalisation;
**caractérisée par** une deuxième étape d'estimation (S205, S806) qui consiste à estimer, au moment où le détachement de l'unité de navigation détachable de l'unité fixe a été détecté lors de l'étape de détection, la position actuelle de l'objet mobile dès le rattachement de l'unité de navigation détachable à l'unité fixe sur la base de la position actuelle de l'objet mobile estimée au moment de la première étape d'estimation lors du détachement de l'unité de navigation détachable de l'unité fixe, et aussi sur la base de la quantité de mouvement totalisée lors de l'étape de totalisation pendant que l'unité de navigation détachable était détachée de l'unité fixe.

6. Programme d'estimation de position qui a pour effet de faire exécuter par un ordinateur la méthode d'estimation de position selon la revendication 5.

7. Support d'enregistrement exploitable sur ordinateur qui sert à y ranger le programme d'estimation de position selon la revendication 6.

8. Unité de navigation détachable (102) qui peut être détachée d'une unité fixe (101) qui, elle, est fixée sur un objet mobile (410), cette unité de navigation détachable ainsi que l'unité fixe faisant partie d'un appareil d'estimation de position (100) configuré de manière à estimer la position actuelle de l'objet mobile, comportant:
un dispositif GPS;
une unité de calcul (106) configurée de manière à calculer la position actuelle de l'objet mobile au moyen du dispositif GPS;
une unité d'estimation (107) configurée de manière à estimer la position actuelle de l'objet mobile sur la base d'une quantité de mouvement obtenue de l'unité fixe au moyen d'une unité de communication (103) de l'appareil d'estimation de position (100) et de la position actuelle calculée par l'unité de calcul; et
une unité de détection (104) configurée de manière à détecter le détachement à partir de l'unité fixe;
**caractérisée en ce que** la quantité de mouvement représente la quantité de mouvement de l'objet mobile pendant que l'unité de navigation détachable est détachée de l'unité fixe,
**caractérisée en ce que** l'unité d'estimation est adaptée de manière à estimer, au moment où l'unité de détection détecte le rattachement à l'unité fixe, la position actuelle de l'objet mobile dès le rattachement à l'unité fixe, ceci sur la base de la quantité de mouvement et de la position de l'objet mobile au moment du détachement de l'unité de navigation détachable à partir de l'unité fixe.

9. Unité de navigation détachable (102) selon la revendication 8, **caractérisée en ce que** l'unité de communication (103) est elle aussi adaptée de manière à obtenir, de l'unité fixe (101) dès le rattachement de l'unité de navigation détachable à l'unité fixe, la position actuelle de l'objet mobile au moment du détachement de l'unité de navigation détachable à partir de l'unité fixe, cette position étant utilisée par l'unité d'estimation (107) pour estimer la position actuelle de l'objet mobile au moment du rattachement à l'unité fixe.

10. Unité de navigation détachable (102) selon la revendication 8, comportant par ailleurs une unité de stockage (108) configurée de manière à stocker la position de l'objet mobile (410) estimée par l'unité d'estimation (107) au moment du détachement de l'unité de navigation détachable à partir de l'unité fixe (101), cette position étant utilisée par l'unité d'estimation (107) pour estimer la position actuelle de l'objet mobile au moment du rattachement à l'unité fixe.

11. Unité fixe (101) adaptée de manière à être fixée sur un objet mobile (410) qui transmet, à l'unité de navigation détachable (102) selon la revendication 8, une quantité de mouvement utilisée pour estimer la position actuelle de l'objet mobile, comportant:
une unité d'accumulation (105) adaptée de manière à totaliser la quantité de mouvement pendant que l'unité de navigation détachable est détachée de l'unité fixe;
et
**caractérisée en ce que** l'unité fixe est adaptée de manière à renvoyer à l'unité de navigation détachable la quantité de mouvement utilisée par l'unité d'estimation (107) pour estimer, au moment où l'unité de détection (104) détecte le rattachement de l'unité de navigation détachable, la position actuelle de l'objet mobile dès le rattachement à l'unité de navigation détachable

12. Unité fixe (101) selon la revendication 11, comportant par ailleurs une unité de stockage (109) adaptée de manière à stocker la position de l'objet mobile au moment du détachement de l'unité de navigation détachable à partir de l'unité fixe,
**caractérisée en ce que** l'unité fixe est, elle aussi, adaptée de manière à renvoyer à l'unité de navigation détachable, à partir de l'unité de stockage, la position de l'objet mobile au moment du détachement de l'unité de navigation détachable de l'unité fixe, cette position étant utilisée par l'unité d'estimation (107) pour estimer la position actuelle de l'objet mobile dès le rattachement à l'unité fixe.
